Europäisches Patentamt

(19) European Patent Office

Office européen des brevets

(11) Numéro de publication : **0 310 497 B1**

(12) **FASCICULE DE BREVET EUROPEEN**

(45) Date de publication du fascicule du brevet :
28.08.91 Bulletin 91/35

(51) Int. Cl.⁵ : **F02K 1/70, F02K 1/62**

(21) Numéro de dépôt : **88402443.1**

(22) Date de dépôt : **28.09.88**

(54) Inverseur de poussée de turboréacteur à portes munies d'une partie interne au profil de veine.

(30) Priorité : 30.09.87 FR 8713490

(43) Date de publication de la demande :
05.04.89 Bulletin 89/14

(45) Mention de la délivrance du brevet :
28.08.91 Bulletin 91/35

(84) Etats contractants désignés :
AT BE CH DE ES FR GB GR IT LI LU NL SE

(56) Documents cités :
FR-A- 2 506 843
GB-A- 754 808
US-A- 3 605 411
US-A- 3 690 561
US-A- 3 774 868

(73) Titulaire : HISPANO-SUIZA Société anonyme dite:
333, Bureaux de la Colline
F-92213 Saint Cloud (FR)

(72) Inventeur : Dubois, Claude Achille Germain
1, rue du Parc Gonfreville l'Orcher
F-76700 Harfleur (FR)

(74) Mandataire : Moinat, François et al
S.N.E.C.M.A. Service des Brevets Boîte
Postale 81
F-91003 Evry Cédex (FR)

Jouve, 18, rue Saint-Denis, 75001 PARIS

# Description

La présente invention concerne un inverseur de poussée de turboréacteur à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

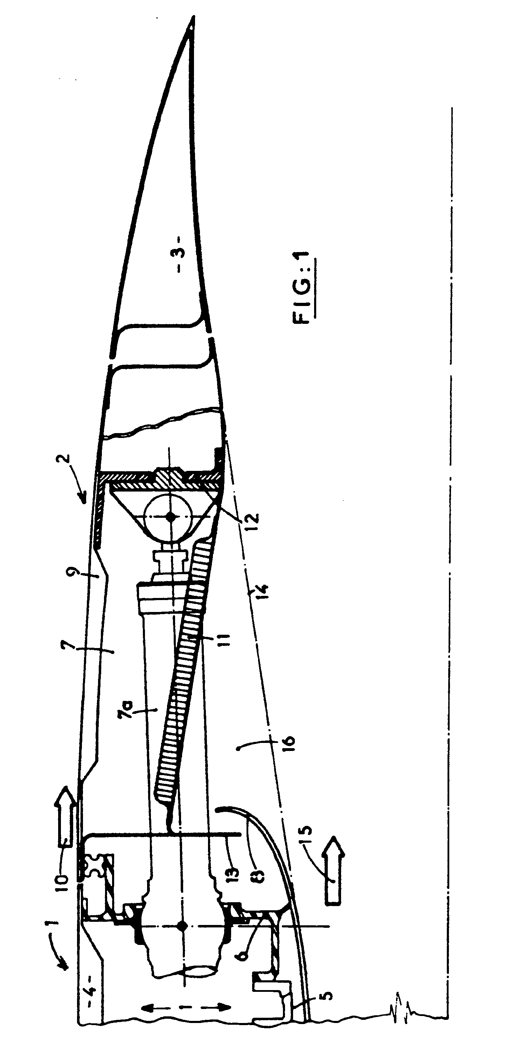

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et un cône arrière fixe 3. Ladite partie fixe amont 1 comprend un panneau externe 4 de nacelle, un panneau externe 5 de veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables, communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion.

Chaque porte 7 est associée à un moyen de commande des déplacements tel qu'un vérin 7a.

En aval, amont et aval étant définis par rapport au sens normal de circulation des gaz en poussée directe, la partie fixe 1 se termine par un bord de déviation 8, fixé sous le cadre avant 6 et destiné à assurer une orientation adéquate de l'écoulement, en position d'inversion de poussée. Chaque porte 7 est composée d'un panneau externe 9 venant se placer en position fermée dans le prolongement du panneau externe 4 de la partie fixe amont 1 pour constituer la paroi aérodynamique continue limitant le flux extérieur au moteur représenté par la flèche 10, d'un panneau interne 11 et d'une structure intérieure 12, assurant la liaison entre les panneaux 9 et 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un déflecteur frontal 13. Afin que la porte 7, en position ouverte d'inversion de poussée, assure des performances suffisantes, il est habituellement nécessaire, comme dans l'exemple connu représenté à la figure 1, que la partie avant du panneau interne 11 s'écarte, dans une direction radiale extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le déflecteur frontal 13 de porte et par le bord de déviation 8 de la partie fixe amont 1, du côté externe par la partie avant du panneau interne 11 de porte et du côté radialement interne par ladite surface théorique 14. Une partie du flux est forcée par le bord de déviation 8 dans ladite cavité 16, créant ainsi une distorsion du flux et des perturbations dans les écoulements. Il en résulte des pertes aérodynamiques qui sont néfastes au fonctionnement en poussée directe.

D'autres exemples de réalisation du type d'inverseur de poussée de turboréacteur à portes basculantes sont décrits notamment par FR-A-2486153, FR-A-2506843 et FR-A-2559838 ainsi que par FR-A-2030034. Aucune solution pleinement satisfaisante n'a toutefois été proposée dans les descriptions citées pour une amélioration du profil de veine correspondant à une enveloppe aérodynamique de veine correcte en fonctionnement de poussée directe.

En outre, US-A-3605411 propose un inverseur de poussée à portes basculantes susceptibles de dévier le flux secondaire d'un turboréacteur à double-flux dans lequel chaque porte est associée par des moyens de liaison à une partie interne qui est disposée du côté radialement interne de ladite porte de manière que, en position fermée de la porte correspondant à la position de poussée directe de l'inverseur, le profil de face interne de ladite partie interne suit la ligne théorique de délimitation aérodynamique du profil de la veine de circulation du flux secondaire et, en position ouverte de la porte correspondant à la position d'inversion de poussée de l'inverseur, ladite partie interne est disposée sur la face interne de la porte. Les moyens proposés pour la commande des déplacements de la partie interne mobile de porte, comportant notamment une glissière et un galet de guidage ne sont pas toutefois pleinement satisfaisants et le but de l'invention est d'améliorer ces moyens de commande et d'assurer la fiabilité et la sécurité de fonctionnement en facilitant la mise en oeuvre.

Ces buts sont atteints, conformément à l'invention, en solidarisant directement l'extrémité de la tige du vérin de manoeuvre de la porte sur la structure interne de porte et en reliant ladite extrémité de tige du vérin par au moins une biellette à ladite partie interne mobile de porte de manière à commander directement les déplacements de ladite partie interne mobile de porte au moyen dudit vérin.

Selon un premier mode avantageux de réalisation de l'invention, la partie avant de ladite partie interne est reliée à la porte par une première et une deuxième biellettes et la partie arrière de la partie interne est reliée à l'extrémité de la tige d'un vérin actionnant le déplacement de la porte.

Selon un deuxième mode, la partie arrière de ladite partie interne est reliée à la porte par une charnière droite et la partie avant de la partie interne est reliée par une biellette à la rotule d'extrémité de la tige du vérin actionnant le déplacement de la porte.

Selon un troisième mode, ladite partie interne est confondue avec le panneau interne de porte qui est relié à la porte par une première biellette dont l'extrémité radialement externe coopère avec un rail de guidage solidaire de la porte et disposé en direction longitudinale, ladite première biellette portant, à mi-longueur, un axe d'articulation qui coopère avec la première extrémité d'une deuxième biellette dont la deuxième extrémité est articulée sur l'extrémité de la tige du vérin de commande des déplacements de porte, et ledit panneau interne de porte est susceptible de pivoter autour de pivots fixés sur les parois latérales de portes.

Dans tous les cas et conformément à l'invention, un profil de paroi limitant extérieurement la veine du flux secondaire, qui correspond à une enveloppe aérodynamique continue de profil théorique de veine est obtenu, en position de poussée directe et également, en position d'inversion de poussée, un profil de la face interne de porte est obtenu qui assure les performances recherchées d'inversion.

D'autres caractéristiques et avantages de l'invention seront mieux compris à la lecture qui va suivre de trois modes de réalisation qui diffèrent par certains détails mais qui sont conformes à l'invention, en référence aux dessins annexés sur lesquels :
— la figure 1 représente une demi-vue schématique, en coupe longitudinale par un plan passant par l'axe de rotation d'un turboréacteur, d'un inverseur de poussée à portes basculantes, en position fermée, d'un type connu et qui a fait précédemment l'objet d'une description ;
— la figure 2 représente, dans une vue analogue à celle de la figure 1, un inverseur de poussée à portes basculantes, dans un premier mode de réalisation conforme à l'invention, l'inverseur étant représenté dans les deux positions de poussée directe et d'inversion de poussée ;
— la figure 3 représente, dans une vue analogue à celle des figures 1 et 2 un inverseur de poussée à portes basculantes, dans un deuxième mode de réalisation conforme à l'invention, l'inverseur étant représenté dans les deux positions de poussée directe et d'inversion de poussée ;
— la figure 4 représente dans vue une analogue à celle des figures 1 à 3 un inverseur de poussée à portes basculantes dans un troisième mode de réalisation conforme à l'invention, l'inverseur étant représenté dans les deux positions de poussée directe et d'inversion de poussée ;
— la figure 5 montre une porte de l'inverseur représenté à la figure 4, dans une section selon la ligne V-V de la figure 4 ;
— la figure 6 montre une porte de l'inverseur représenté à la figure 4, dans une section selon VI-VI de la figure 4 ;

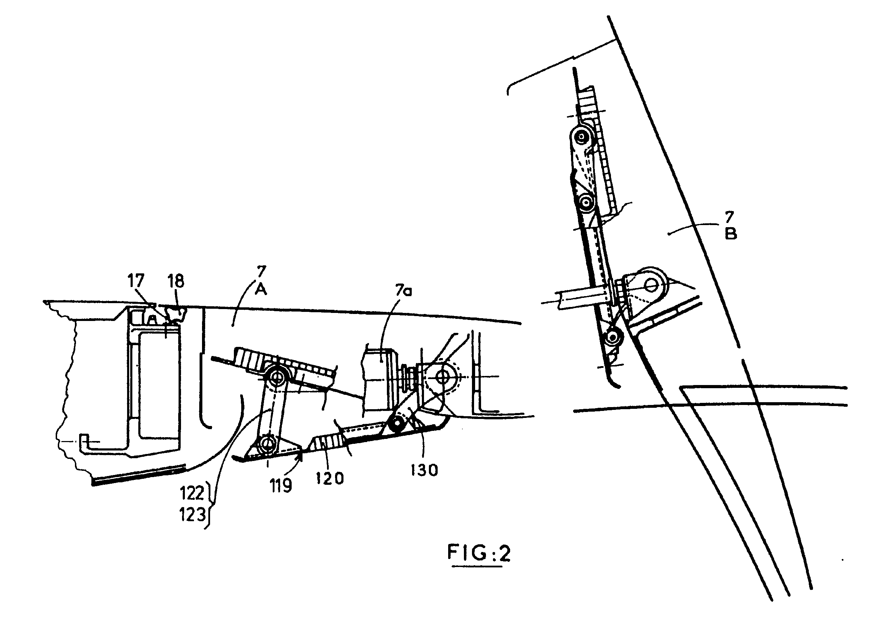

Selon le premier mode de réalisation de l'invention représenté sur la figure 2, un inverseur de poussée susceptible d'effectuer dans les phases de vol pertinentes d'un avion l'inversion du flux secondaire d'un turboréacteur associé à double flux, comporte les ensembles et pièces qui ont été précédemment décrits en référence à la figure 1 dans un exemple connu de réalisation et on conservera les mêmes références de ces éléments lorsqu'ils sont identiques ou correspondants. L'inverseur de poussée comporte ainsi la partie fixe amont 1 composée du panneau externe 4 de nacelle, du panneau externe 5 de veine du flux secondaire représenté par la flèche 15, panneau dont l'extrémité aval est prolongée par le bord de déviation 8 et du cadre avant 6 formant le support du vérin 7a, puis la partie mobile 2 constituée des portes 7, chacune composée du panneau externe 9 constituant la paroi de délimitation aérodynamique du flux extérieur au moteur représenté par la flèche 10 lorsque la porte 7 est en position fermée, du panneau interne 11, de la structure intérieure 12 et de l'ensemble des déflecteurs comportant notamment le déflecteur frontal 13 et enfin le cône arrière fixe 3. De manière également connue, la porte 7 à son bord avant porte un élément d'appui 18 qui coopère, lorsque l'inverseur se trouve en position fermée correspondant au fonctionnement en poussée directe, avec un élément support 17 porté par le cadre avant 6 de la partie fixe amont 1 et avec lequel il forme une étanchéité. Conformément à l'invention, la surface théorique 14, représentée à la figure 1 de l'exemple connu où elle délimite avec le déflecteur frontal 13, le bord de déviation 8 et la partie avant du panneau interne 11 la cavité 16, en constituant l'enveloppe aérodynamique continue théorique de la veine secondaire, est matérialisée, dans le mode de réalisation de l'invention représenté sur la figure 1 lorsque l'inverseur est en position fermée, par la face interne 119 d'une partie interne 120 de porte.

Les moyens de liaison de ladite partie interne 120 à la porte 7 sont constitués d'une part par une première et une deuxième biellettes respectivement 122 et 123 qui relient l'avant de la partie interne 120 à la partie avant du panneau interne 11 de la porte 7, les extrémités de biellettes comportant de manière connue des moyens d'articulation tels que chapes, rotules, axes de rotation. D'autre part, et de manière remarquable, conforme à l'invention, une troisième biellette 130 relie l'arrière de la partie interne 120 à l'extrémité de la tige du vérin 7a qui coopère avec la porte 7, les mêmes moyens connus d'articulation étant également disposés aux extrémités de la biellette 130.

Sur la figure 2, la porte 7 d'inverseur de poussée conforme à l'invention est montrée en position fermée A correspondant au fonctionnement en poussée directe et en position ouverte B correspondant à un fonctionnement en inversion du flux secondaire.

On va donner en référence à la figure 2 une description sommaire du fonctionnement de l'inverseur de poussée qui vient d'être décrit dans le premier mode de réalisation conforme à l'invention. Dans la position fermée de l'inverseur correspondant à un fonctionnement en poussée directe représenté à la position A de la figure 2, comme dans l'exemple connu représenté à la figure 1, le panneau externe 9 de porte 7 délimite le flux extérieur 10. Par contre et de manière remarquable, conforme à l'invention, la veine du flux secondaire 15 est délimitée extérieurement par une paroi aérodynamique continue, confondue avec la ligne théorique 14 et constituée des faces internes du panneau externe 5 de la partie fixe amont 1 de l'inverseur, de la partie interne 120 qui se raccorde à son extrémité aval avec la partie arrière du panneau interne 11 de porte 7 et enfin du cône arrière fixe 3. Aucun écoulement n'atteint dans ce cas la cavité 16 interne de la porte 7 et toute distorsion du flux ainsi que toute perturbation de l'écoulement aérodynamique principal sont évitées de manière avantageuse par les moyens de l'invention.

Lorsque le signal est transmis, par des moyens connus non représentés aux dessins, au dispositif de commande des déplacements de la partie mobile 2 de l'inverseur de passer en position d'inversion de poussée, le vérin 7a actionne la porte 7 qui prend la position B de la figure 2. Dans ce déplacement, la partie interne 120 reliée à la porte 7 par les biellettes 122 et 123 suit le déplacement de ladite porte 7. Sous l'action du vérin 7a, la porte 7 continue son déplacement vers l'ouverture complète en position d'inversion de poussée correspondant à la déviation du flux secondaire, telle que schématisée à la position B de la figure 2 et sous l'action de l'extrémité de la tige du vérin 7a, le pivotement de la biellette 130 amène la partie interne 120 à se plaquer contre la porte 7, les biellettes 122 et 123 se repliant en position d'effacement.

De même, lorsque, de la même manière, un signal de retour à la position de poussée directe, telle que représentée à la figure 2, est transmis, la porte 7 revient à sa position de fermeture sous l'action du vérin 7a et les mêmes déplacements se produisent en sens inverse de ce qui vient d'être décrit lors de l'ouverture.

Notamment, la partie interne 120 de porte reprend sa position écartée de la partie avant du panneau interne 11 de la porte 7, selon la ligne théorique 14 du profil de veine secondaire.

Le choix déterminé de l'emplacement relatif des différents points d'articulation permet lors des déplacements de la porte 7 sous l'action du vérin 7a d'obtenir les positions adéquates recherchées pour la partie interne 120, d'une part, correspondant à la position A de la figure 2, la partie interne 120 suivant la ligne théorique 14 de profil continu de la veine secondaire et, d'autre part, correspondant à la position B de la figure 2, la partie interne 120 contre la face interne de la porte 7 de manière à assurer les performances d'inversion.

Dans l'utilisation conforme à l'invention d'une partie interne telle que 120 associée à la porte 7 d'un inverseur de poussée, plusieurs variantes peuvent être aménagées en fonction des conditions particulières des applications envisagées et notamment en ce qui concerne les moyens de liaison entre ladite partie interne et la porte 7 qui doivent également remplir la fonction recherchée des déplacements relatifs de la partie interne par rapport à la porte de manière que, d'une part, en position de poussée directe de l'inverseur, la partie interne suit la ligne théorique du profil de veine secondaire et d'autre part, en position ouverte de l'inverseur correspondant à un fonctionnement en inversion de poussée, la limite de la veine du flux dévié constituée par ladite partie interne de porte assure les performances optimales recherchées pour l'inversion. Deux autres modes de réalisation seront ainsi décrits, qui procurent les mêmes avantages que ceux précédemment indiqués pour le premier mode et tout en restant conformes à l'invention, présentent, comme indiqué ci-dessus, des variantes dans les détails de réalisation des moyens de liaison entre la partie interne et la porte. Dans la description qui va suivre, on conservera les mêmes références déjà utilisées pour la description du premier mode de réalisation pour des éléments identiques ou exactement correspondants tandis que des références augmentées d'une centaine seront utilisées pour désigner les éléments similaires ou analogues.

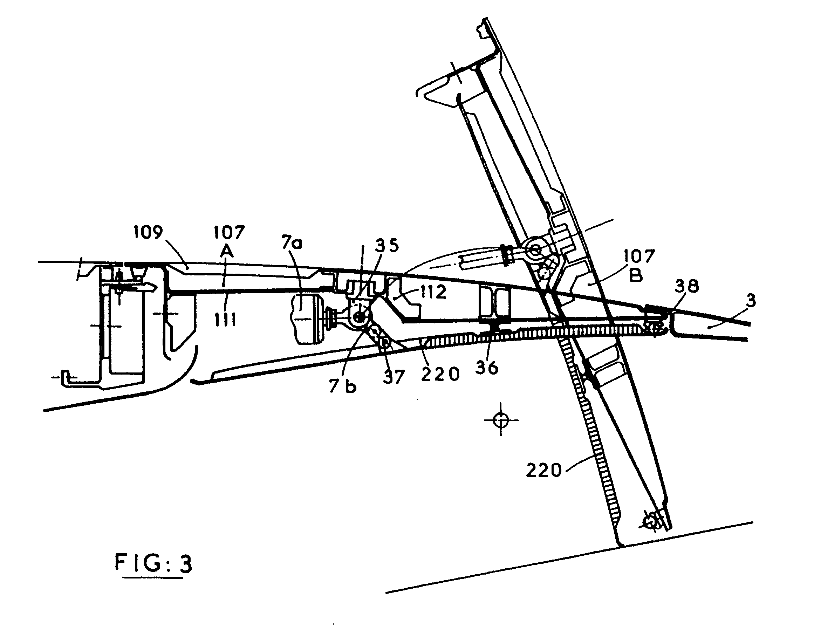

Dans le deuxième mode de réalisation conforme à l'invention représenté à la figure 3, une porte modifiée 107 est utilisée. La structure intérieure 112 de la porte 107 est en effet modifiée dans ce cas de manière à déplacer le point d'application de l'extrémité de la tige du vérin 7a sur un support 35 fixé sur la porte 107 en position radialement interne par rapport au panneau interne 111 et non plus comme précédemment, dans l'espace compris entre le panneau interne 111 et le panneau externe 109. L'épaisseur de la porte 107, entre lesdits panneaux interne 111 et externe 109 est également réduite de manière à doubler la face interne complète de la porte 107 par une partie interne 220 formant un panneau qui s'étend en direction aval jusqu'au bord arrière de la porte 107.

Les moyens de liaison entre porte 107 et partie interne 220 sont également adaptés en conséquence.

La partie arrière de la partie interne 220 est reliée à la porte 107 par une charnière droite 36 et une biellette unique 37, comportant à ses extrémités les moyens habituels d'articulation, relie la partie avant de la partie interne 220 à la rotule 7b d'extrémité de la tige du vérin 7a. Le bord arrière du panneau interne 111 porte en outre des moyens d'appui 38 pour l'extrémité arrière de la partie interne 220.

Comme précédemment, dans les autres modes de réalisation décrits, la partie interne 220 assure toujours le profil adéquat de veine, dans la position A représentée à la figure 2, correspondant au fonctionnement en poussée directe aussi bien que dans la position B, de l'inversion de poussée, les variations relatives de la partie interne 120 par rapport à la porte 107 étant obtenues, dans le passage d'une position à l'autre A et B, par l'action du vérin 7a sur la biellette 37, de manière remarquable, conforme à l'invention.

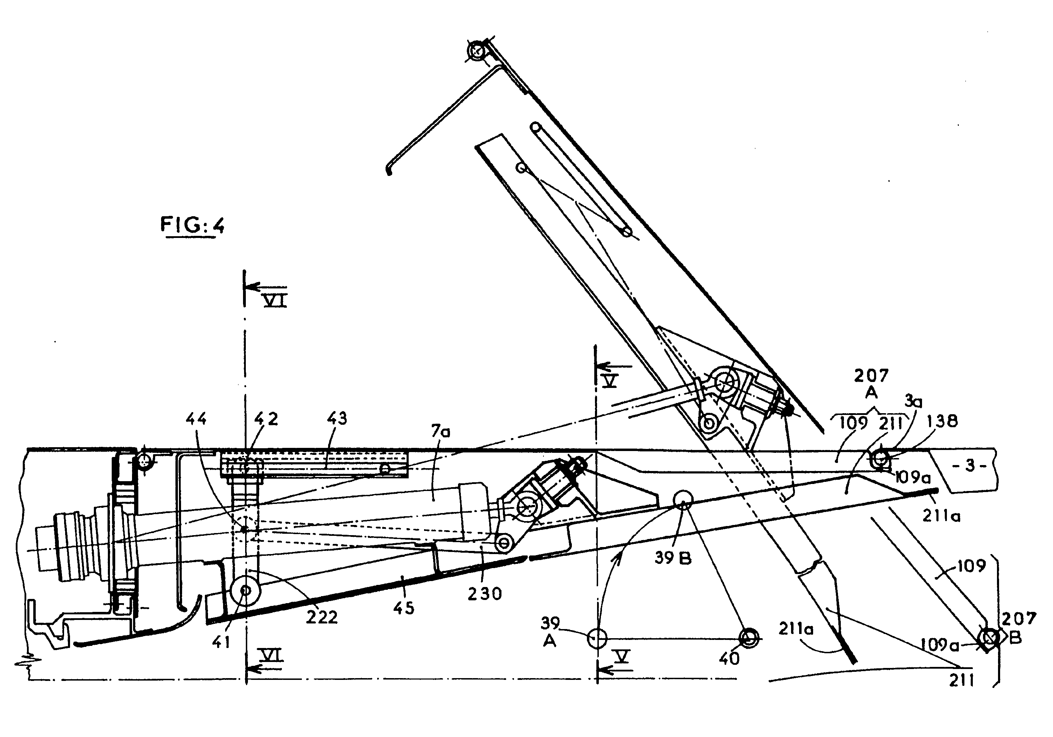

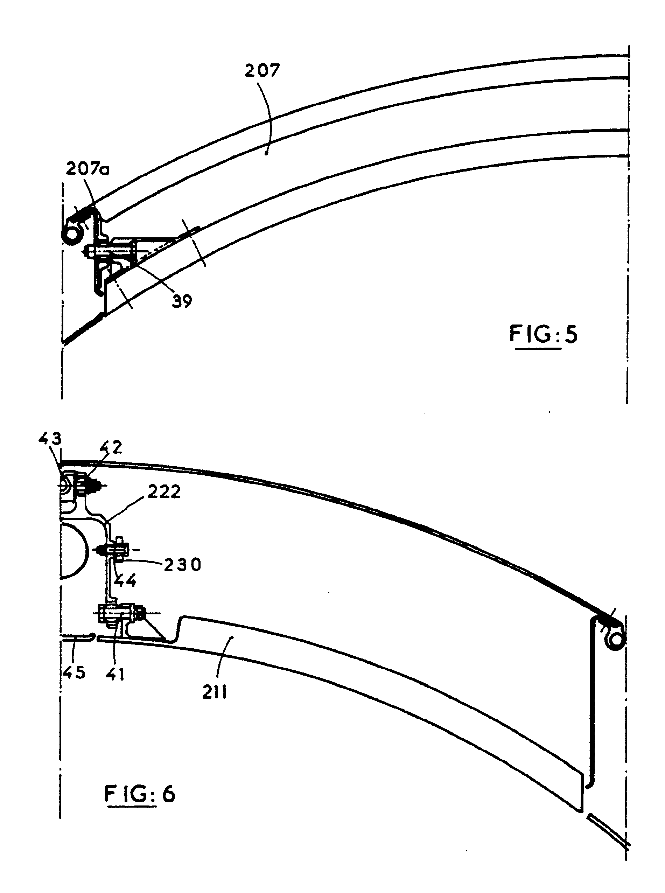

Dans le troisième mode de réalisation conforme à l'invention représenté aux figures 4 à 6, une porte 207 comporte, de manière analogue au deuxième mode de réalisation décrit ci-dessus en référence à la figure 3, un panneau interne 211 susceptible, en passant de la position fermée de porte repérée en A correspondant au fonctionnement en poussée directe à la position ouverte repérée en B correspondant à l'inversion de poussée, d'un léger pivotement qui écarte la partie arrière dudit panneau interne 211 et notamment son bord arrière 211a du panneau externe 109 de porte et notamment de son bord arrière 109a. Ledit bord arrière 109a du panneau externe 109 de la porte 207 porte un élément d'appui 138 susceptible en position fermée de la porte 207 de coopérer avec le bord amont 3a du cône fixe arrière 3 de l'inverseur. Ledit pivotement dudit panneau interne 211 s'effectue autour de deux pivots d'articulation symbolisés en 39 sur la figure 4, dans les positions A et B correspondant aux deux positions respectivement fermée et ouverte. Un pivot 39 monté sur une paroi latérale 207a de la porte 207 est représenté plus en détails sur la figure 5. Le basculement de la porte 207 entre lesdites positions A fermée et B ouverte s'effectue autour d'axes d'articulation tels que 40 qui assurent latéralement et de manière connue la fixation de la porte 207 sur une ferrure longitudinale de la structure fixe de l'inverseur de poussée. Dans ce troisième mode de réalisation, la partie interne de porte, telle que 120, ou 220 dans les modes précédemment décrits de réalisation, est ainsi constituée par le panneau interne 211 de la porte 207. La partie avant du panneau interne 211 porte à l'avant un axe 41 autour duquel s'articule une extrémité d'une première biellette 222 dont l'extrémité radialement externe porte un support glissant 42 qui coopère avec un rail de guidage 43 solidaire de la partie avant du panneau externe 109 de la porte 207 sur lequel il est fixé par tout moyen connu selon une direction longitudinale. La figure 6 montre plus en détails ladite première biellette 222 qui porte en outre, à mi-longueur, un axe d'articulation 44 sur lequel est montée une première extrémité d'une deuxième biellette 230 dont la deuxième extrémité s'articule sur l'extrémité de la tige du vérin 7a de commande des déplacements de la porte 207. Lorsque la porte 207 passe de la position fermée A à la position ouverte B, la deuxième biellette 230 suivant les déplacements de l'extrémité de la tige du vérin 7a provoque le déplacement du support 42 d'extrémité de la première biellette 222 le long du rail de guidage 43 de l'avant vers l'arrière, entraînant ainsi un pivotement de la partie interne 211 qui se rapproche de la partie avant du panneau externe 109 de la porte 207. Le pivotement précédemment décrit du panneau interne 211 aboutit ainsi à donner à la face interne de la porte 207 dans sa position ouverte correspondant au fonctionnement en inversion de poussée une position qui assure dans les meilleures conditions les performances d'inversion. De même, en position fermée de la porte 207 correspondant au fonctionnement en poussée directe, le retour de l'extrémité de tige de vérin, de la seconde biellette 230 et de la première biellette 222, qui écarte le panneau 211 de la partie avant du panneau externe 109 de la porte 207 et rapproche le bord arrière 211a du bord arrière 109a du panneau externe 109, amène la surface interne de la porte 207 à une position correspondant au profil externe théorique et continue de la veine du flux secondaire.

Par ailleurs, comme représenté sur les figures 4 et 6, le vérin 7a de commande des déplacements de la porte 207 supporte un obturateur 45 de forme générale plane, qui, en position de jet direct, ferme l'ouverture ménagée dans la partie avant du panneau interne 211 pour le passage dudit vérin 7a lors de l'ouverture de la porte 207 et constituant, dans la position fermée, le logement ou tunnel du vérin. Cette disposition complémentaire avantageuse évite toute perturbation dans les écoulements aérodynamiques du flux à ce niveau. Elle peut avantageusement être appliquée également dans les modes de réalisation de la présente invention qui ont été précédemment décrits.

Bien entendu et quel que soit le mode de réalisation choisi, la partie interne 120, 220, ou sous sa forme de panneau interne 211, reçoit la structure mécanique adaptée à sa fonction et comporte en outre tous aménagements connus de fonction acoustique destinés à obtenir les réductions souhaitées de niveau sonore occasionné par les écoulements.

## Revendications

1. Inverseur de poussée de turboréacteur à double flux comportant des portes basculantes (7, 107, 207) susceptibles, en position fermée, de s'intégrer dans la paroi extérieure du canal annulaire du flux secondaire et, en position ouverte, de dévier ledit flux secondaire, chaque porte (7, 107, 207) étant constituée au moins d'un panneau externe (9, 109) d'un panneau interne (11, 111, 211) d'une structure de liaison (12) entre lesdits panneaux (9, 11 ; 109, 111 ; 211) et d'au moins un déflecteur frontal (13) et étant associée, d'une part, à un vérin (7a) de commande des déplacements et, d'autre part, par des moyens de liaison (122, 123, 130 ; 36, 37), à une partie interne (120 ; 220 ; 211) formant volet de porte, qui est disposée du côté radialement interne de ladite porte (7 ; 107 ; 207), de manière que, en position fermée de la porte (7, 107, 207) correspondant à la position de poussée directe de l'inverseur, le profil de face interne (19) de ladite partie interne (120 ; 220 ; 211) suit la surface théorique (14) de délimitation aérodynamique du profil de la veine de circulation du flux secondaire et, en position ouverte de la porte (7 ; 107 ; 207) correspondant à la position d'inversion de poussée de l'inverseur, ladite partie interne (120 ; 220 ; 211) est disposée sur la face interne de la porte caractérisée en ce que l'extrémité (7b) de la tige du vérin (7a) de manoeuvre de la porte est directement solidaire de la structure interne (12 ; 112) de porte et est reliée par au moins une biellette (130 ; 37 ; 230) à ladite partie interne (120 ; 220 ; 211) de porte, de manière à commander directement les déplacements de ladite partie interne mobile (120 ; 220 ; 211) de porte au moyen dudit vérin (7a).

2. Inverseur de poussée selon la revendication 1 caractérisé en ce que la partie avant de ladite partie interne (120) est reliée à la porte (7) par une première (122) et une deuxième (123) biellettes et la partie arrière de la partie interne (120) est reliée par une troisième biellette (130) à la rotule d'extrémité de la tige du vérin (7a) de commande des déplacements de la porte (7).

3. Inverseur de poussée selon la revendication 1 caractérisé en ce que la partie avant de ladite partie interne (220) est reliée par une biellette (37) à la rotule (7b) d'extrémité de la tige du vérin (7a) de commande des déplacements de la porte (7) et la partie arrière de la partie interne (220) est reliée à la porte (107) par une charnière droite (36), ladite partie interne (220) formant un panneau mobile qui double entièrement la face interne de la porte (107).

4. Inverseur de poussée selon la revendication 1 caractérisé en ce que ladite partie interne de porte est confondue avec le panneau interne (211) de porte qui est relié à l'avant à la porte (207) par une première biellette (222) dont l'extrémité radialement externe coopère avec un rail de guidage (43) solidaire de la porte et disposé en direction longitudinale, ladite première biellette (222) portant, à mi-longueur, un axe d'articulation (44) qui coopère avec la première extrémité d'une deuxième biellette (230) dont la deuxième extrémité est articulée sur l'extrémité de la tige du vérin (7a) de commande des déplacements de porte

et ledit panneau interne (211) de porte est susceptible de pivoter autour de pivots (39) fixés sur les parois latérales (207a) de la porte (207).

5. Inverseur de poussée selon l'une quelconque des revendications 1 à 4 caractérisé en ce que le vérin (7a) de commande des déplacements de porte (7 ; 107 ; 207) supporte un obturateur (45) adapté à la fermeture au profil de veine d'une ouverture ménagée dans ladite partie interne (120 ; 220 ; 211) de porte pour le logement du vérin (7a) en position de jet direct.

**Patentansprüche**

1. Schubumkehrvorrichtung für Zweistrahl-Strahltriebwerke mit schwenkbaren Klappen (7, 107, 207), die sich in Schließstellung in die Außenwand der ringförmigen Strömung des Sekundärstroms einfügen und in Öffnungsstellung den Sekundärstrom umlenken können, wobei Jede Klappe (7, 107, 207) aus wenigstens einer äußeren Platte (9, 109), einer inneren Platte (11, 111, 211), einer Verbindungsstruktur (12) zwischen diesen Platten (9, 11 ; 109, 111 ; 211) und wenigstens einem frontalen Deflektor (13) besteht und einerseits mit einem Antriebszylinder (7a) für ihre Bewegungen und andererseits über Verbindungsmittel (122, 123, 130 ; 36, 37) mit einem einen Klappenflügel bildenden Innenteil (120 ; 220 ; 211) verbunden ist, das auf der radial inneren Seite der Klappe (7 ; 107 ; 207) derart angeordnet ist, daß in der der Direktschubposition entsprechenden Schließstellung der Klappe (7, 107, 207) das Profil der Innenseite (19) des genannten Innenteils (120 ; 220 ; 211) der theoretischen aerodynamischen Begrenzungsfläche (14) des Profils der Zirkulationsströmung des Sekundärstroms folgt und in der der Schubumkehrposition der Schubumkehrvorrichtung entsprechenden.Öffnungsstellung der Klappe (7 ; 107 ; 207) das genannte Innenteil (120 ; 220 ; 211) sich auf der Innenseite der Klappe befindet, dadurch gekennzeichnet, daß das Ende (7b) der Kolbenstange des Antriebszylinders (7a) zur Betätigung der Klappe mit der inneren Struktur (12 ; 112) der Klappe direkt fest verbunden ist und mit dem genannten Innenteil (120; 220 ; 211) der Klappe über wenigstens einen Schwingarm (30 ; 37 ; 230) derart verbunden ist, daß die Bewegungen des beweglichen Innenteils (120 ; 220 ; 211) der Klappe durch den Antriebszylinder (7a) direkt gesteuert werden.

2. Schubumkehrvorrichtung nach Anspruch 1, dadurch gekennzeichnet, daß der vordere Teil des genannten Innenteils (120) über einen ersten (122) und einen zweiten Schwingarm (123) mit der Klappe (7) und der hintere Teil des Innenteils (120) über einen dritten Schwingarm (130) mit dem Gelenk am Ende der Kolbenstange des Antriebszylinders (7a) für die Bewegungen der Klappe (7) verbunden ist.

3. Schubumkehrvorrichtung nach Anspruch 1, dadurch gekennzeichnet, daß der vordere Teil des genannten Innenteils (220) über einen Schwingarm (37) mit dem Gelenk am Ende der Kolbenstange des Antriebszylinders (7a) für die Bewegungen der Klappe (7) und der hintere Teil des Innenteils (220) über ein gerades Scharnier (36) mit der Klappe (107) verbunden ist, wobei das Innenteil (220) eine bewegliche Platte bildet, die die Innenseite der Klappe (107) vollständig auskleidet.

4. Schubumkehrvorrichtung nach Anspruch 1, dadurch gekennzeichnet, daß das Innenteil der Klappe mit der inneren Platte der Klappe zusammenfällt, die vorn über einen ersten Schwingarm (222), dessen radial äußeres Ende mit einer mit der Klappe fest verbundenen und in Längsrichtung angeordneten Führungsschiene (43) zusammenwirkt, mit der Klappe (207) verbunden ist, wobei dieser erste Schwingarm (222) in der Mitte seiner Längsausdehnung eine Gelenkachse (44) trägt, die mit dem ersten Ende eines zweiten Schwingarms (230) zusammenwirkt, dessen zweites Ende mit dem Ende der Kolbenstange des Antriebszylinders (7a) für die Bewegungen der Klappe gelenkig verbunden ist, und wobei die innere Platte (211) der Klappe um Zapfen (39) verschwenkbar ist, die an den Seitenwandungen (207a) der Klappe (207) befestigt sind.

5. Schubumkehrvorrichtung nach einem der Ansprüche 1 bis 4, dadurch gekennzeichnet, daß der Antriebszylinder (7a) für die Bewegungen der Klappe (7 ; 107 ; 207) ein Verschlußglied (45) trägt, das in der Direktstrahlposition eine in dem Innenteil (120 ; 220 ; 211) der Klappe angebrachte Öffnung für die Aufnahme des Antriebszylinders (7a) im Strömungsprofil verschließen kann.

## Claims

1. Thrust reverser for a turbojet bypass engine comprising tilting doors (7, 107, 207) capable, in the closed position, of integrating itself in the outer wall of the annular channel of the secondary flow and, in the open position, of diverting the said secondary flow, each door (7 107, 207) being made up of at least one outer panel (9, 109) an inner panel (11, 111, 211) a connecting structure (12) linking the said panels (9, 11 ; 109, 111 ; 211) and of at least one front deflector (13) and being associated on the one hand, with a ram (7a) to control its movements and, on the other hand by a means of linkage (122, 123, 130 ; 35, 37), with an inner part (120, 220, 211) forming a door shutter, which is placed radially inwards of the said door (7, 107, 207) in such a way that, with the door (7, 107, 207) in the closed position of the thrust reverser corresponding to direct thrust, the profile of the inner face (19) of the said inner part (120, 220, 211) follows the theoretical surface (14) of aerodynamic limitation of the profile of the circulation of the secondary flow and, with the door (7, 107, 207) in the open position corresponding to the reversal of thrust, the said inner part (120, 220, 211) is arranged on the inner face of the door characterised in that the end (7b) of the piston rod of the ram (7a) actuating the door is directly fixed to the internal structure (12, 112) of the door and is connected by at least one connecting link (130, 37, 230) to the said door inner part (120, 220, 211) in such a way as to control directly the movements of the said inner movable door part (120, 220, 211) by means of the said ram (7a).

2. Thrust reverser in accordance with Claim 1 characterised in that the front part of the said inner part (120) is connected to the door (7) by a first (122) and a second (123) connecting link and the rear part of the inner part (120) is connected by a third connecting link (130) to the ball joint at the end of the piston rod of the ram (7a) controlling the movements of the door (7).

3. Thrust reverser in accordance with Claim 1 characterised in that the front part of the said inner part (220) is connected by a connecting link (37) to the ball joint (7b) at the end of the piston rod of the ram (7a) controlling the movements of the door (7) and the rear part of the inner part (220) is connected to the door (107) by a straight hinge (36), the said inner part (220) forming a movable panel which completely doubles up the inner face of the door (107).

4. Thrust reverser in accordance with Claim 1 characterised in that the front part of the said inner part of the door is merged with the inner door panel (211) which is connected at the front to the door (207) by a first connecting link (222) whose radially outer end works with a guide rail (43) fixed to the door and placed in a longitudinal direction, the said first connecting link carrying at its mid-point, a pivot pin (44) which works with the first end of a second connecting link (230) whose second end is articulated on the the end of the piston rod of the ram (7a) controlling the movements of the door and the said inner door panel (211) is capable of pivoting around pivots (39) fixed to the side walls (207a) of the door (207).

5. Thrust reverser in accordance with any of the Claims 1 to 4 characterised in that the ram (7a) controlling the movements of the door (7, 107, 207) supports a blanking piece (45) made to close off, to the profile of the airstream, an opening formed in the said inner door part (120, 220, 211) to house the ram (7a) when in the direct thrust position.

FIG:1

FIG:2

FIG: 3

FIG:4

EP 0 310 497 B1

207

207a

39

FIG: 5

43

42

222

230

44

45    41

211

FIG: 6